(19) Europäisches Patentamt

European Patent Office

Office européen des brevets

(11) Veröffentlichungsnummer: **0 364 610 B1**

(12) **EUROPÄISCHE PATENTSCHRIFT**

(45) Veröffentlichungstag der Patentschrift: **13.05.92**

(21) Anmeldenummer: **88117206.8**

(22) Anmeldetag: **15.10.88**

(51) Int. Cl.⁵: **B02C 18/40**, B09B 3/00

(54) **Verfahren und Vorrichtung zur Beseitigung von unter Druck stehenden Behältern, wie z.B. Spraydosen.**

(43) Veröffentlichungstag der Anmeldung:
**25.04.90 Patentblatt 90/17**

(45) Bekanntmachung des Hinweises auf die
Patenterteilung:
**13.05.92 Patentblatt 92/20**

(84) Benannte Vertragsstaaten:
**AT BE CH DE ES FR GB GR IT LI LU NL SE**

(56) Entgegenhaltungen:
**DE-A- 3 817 273**
**DE-U- 8 805 008**

(73) Patentinhaber: **AGR ABFALLSBESEITIGUNGS-
GESELLSCHAFT RUHRGEBIET mbH
Rüttenscheider Strasse 66
W-4300 Essen 1(DE)**

(72) Erfinder: **Kohrs, Günter
Bulmker Strasse 63
W-4650 Gelsenkirchen(DE)**
Erfinder: **Stadie, Klaus
Am Kreuzweg 41 a
W-4630 Bochum(DE)**

(74) Vertreter: **Vomberg, Friedhelm, Dipl.-Phys.
Schulstrasse 8
W-5650 Solingen 1(DE)**

**Beschreibung**

Verfahren und Vorrichtung zur Beseitigung von unter Druck stehenden Behältern, wie z.B. Spraydosen

Die Anmeldung betrifft ein Verfahren und eine Vorrichtung zum Zerkleinern von unter Druck stehenden Behältern, wie z.B. Spraydosen, nach den Oberbegriffen der Anprüche 1 und 7.

Spraydosen werden bisher mit dem Hausmüll oder wild entsorgt. Betrachtet man das durch den Hohlraumkörper eingenommene Deponievolumen, so ist bei der Zugrundelegung von 670 Millionen Dosen allein in der Bundesrepublik Deutschland ein Volumen von ca. 500.000 m³ jährlich dafür vorzuhalten. Bei ständig knapper werdendem Deponieraum stellt somit die Entsorgung von unter Druck stehenden Behältern ein beträchtliches Problem dar.

Dazu kommt, daß die Inhalte von Spraydosen oder ähnlicher unter Druck stehender Behälter, die z.B. über den kommunalen Hausmüll in eine Deponie gelangen, durch die Verrottung der Dose zeitverzögert in die Umwelt gelangen und dort zum Teil irreparable Schäden verursachen können. Beispielsweise seien hier nur die für die Ozonschicht schädlichen Fluorkohlenwasserstoffe erwähnt. Aus Gründen des Umweltschutzes muß ferner verhindert werden, daß andere in Spraydosen enthaltene Substanzen etwa in das Grundwasser gelangen und dort aggressive Verbindungen bilden. Auch insoweit müssen bei der Entsorgung von Spraydosen neue Wege gefunden werden.

Um bei der mechanischen Zerkleinerung von nicht vollständig entleerten Behältern die Explosionsgefahr zu minimieren wird in der DE-U-88 05 008 vorgeschlagen, den Arbeitsraum, in dem die Zerkleinerungswerkzeuge angeordnet sind, luftdicht abzuschließen, in den Arbeitsraum Schutzgase einzuleiten, über dem Arbeitsraum eine luftdicht verschließbare Schleuse anzuordnen und eine Auffangvorrichtung für die Bestandteile der zerkleinerten Behälter vorzusehen, die sich luftdicht an den Arbeitsraum anschließt. Mit dem Arbeitsraum steht eine Abgasleitung in Verbindung, worüber die gasförmigen Bestandteile abgeführt werden. Am Ende der Abgasleitung ist eine Abfackelstation oder thermische Verbrennungseinrichtung angeschlossen. Die gasförmigen Verbrennungsprodukte gelangen demnach umweltbelastend ins Freie. Soweit im Arbeitsraum ein leichter Schutzgasüberdruck eingestellt wird, dient dieser nur dazu, die in der Vorrichtung befindliche Luft herauszudrücken und eine Atmosphäre zu schaffen, bei der die untere Explosionsgrenze unterschritten wird.

Der Erfindung liegt die Aufgabe zugrunde, Spraydosen o. dgl. so zu beseitigen, daß keine schädlichen Stoffe in die Umwelt freigesetzt werden, daß Deponieraum eingepart wird und verwertbare Stoffe recycled werden.

Diese Aufgabe wird durch das in dem Anspruch 1 beschriebene Verfahren gelöst, das dadurch gekennzeichnet ist, daß der Inertgas-Überdruck mindestens so hoch wie der Innendruck der Behälter eingestellt wird.

Hierdurch ist gewährleistet, daß die Inhaltsstoffe der unter Druck stehenden Behälter auch nach der Zerkeinerung flüssig bleiben, also nach unten abfließen und dort in flüssigem Zustand abgezogen werden.

Weiterbildungen des Verfahrens sind in den Ansprüchen 2 bis 6 beschrieben.

So wird vorzugsweise als Inertgas Stickstoff, Kohlensäure oder Helium verwendet. Nach einer Weiterbildung des Verfahrens wird der Überdruck mindestens auf den Verflüssigungsdruck der gasförmigen Inhaltsstoffe, wie z.B. den Treibgasen, eingestellt. Zur Entsorgung der Inhaltsstoffe können diese in einen Verbrennungsofen eingedüst werden. Alternativ ist es weiterhin möglich, die Treibgase von den übrigen Inhaltsstoffen abzutrennen und zur Wiederverwertung zu sammeln, wobei sie vorzugsweise als recyclebares Produkt einer Charge in den jeweiligen Prozeß zurückgeführt werden.

Zur Durchführung des erfindungsgemäßen Verfahrens wird die im Anspruch 7 beschriebene Vorrichtung vorgeschlagen, die dadurch gekennzeichnet ist, daß der Druckbehälter und der Auffangbehälter für einen Druck von 3 bar bis 15 bar, vorzugsweise 10 bis 15 bar, ausgelegt sind.

Weiterbildungen der erfindungsgemäßen Vorrichtung sind in den Ansprüchen 8 bis 14 beschrieben.

Die Vorteile des Verfahrens und der Vorrichtung liegen darin, daß erstmals eine Möglichkeit der umweltbewußten Entsorgung von Spraydosen gefunden wurde, die zudem auch die Möglichkeit schafft, bestimmte Stoffe zu recyceln. Gedacht ist in erster Linie an Fehlchargen von Spraydosen, die nicht in den Handel gelangen können, deren Inhaltsstoffe jedoch neu abfüllbar sind. Weitere Vorteile und ein Ausführungsbeispiel werden im folgenden anhand der Zeichnungen erläutert. Es zeigen

Fig. 1    eine schematische Darstellung der erfindungsgemäßen Vorrichtung in einer Seitenansicht und

Fig. 2    dieselbe Vorrichtung in einer Vorderansicht.

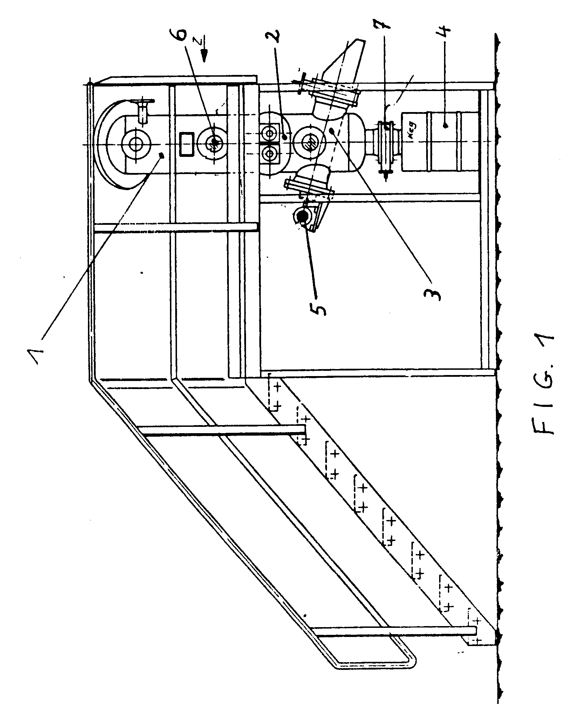

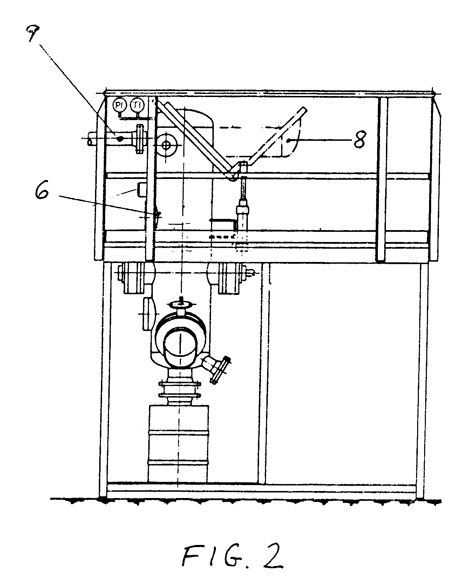

Die in Fig. 1 und 2 dargestellte Vorrichtung besteht im wesentlichen aus einem mit einer Klappe 8 druckdicht verschließbaren Druckbehälter 1, der bodenseitig eine Zerkleinerungsvorrichtung 2 und eine darunterliegende Trennvorrichtung 3 aufweist. Als Zerkleinerungsvorrichtung 2 dient ein langsam laufendes Schneidwerkzeug, z.B. aus gegenläufig angetriebenen Wellen, die parallel zueinander angeordnet sind und radial abstehende Schneidscheiben und/oder -zähne aufweisen. Die Abstände der Wellen und der Schneidscheiben bzw. -zähne sind auf die Größe der zu entsorgenden Behälter abgestimmt, ggf. auch einstellbar.

Die Trennvorrichtung 3 besteht aus einem pneumatisch über den Antrieb 5 mit Inertgas angetriebenen Schwingsieb. Unterhalb der Trennvorrichtung 3 und mittels einer Kupplung 7 an den Druckbehälter 1 anschließbar ist ein Auffangbehälter 4 angeordnet, der mittels eines Hubtisches vertikal bewegbar ist.

Oberhalb der Zerkleinerungsvorrichtung 2 sind Sprühdüsen 6 vorgesehen, mittels denen chemische Substanzen in Richtung auf die bei der Zerkleinerung der unter Druck stehenden Behälter aufgegeben (aufgerieselt) werden können.

An den oberen Bereich des Druckbehälters 1 ist ein Pufferbehälter 9 angeflanscht, über den Inertgas dem Druckbehälter zugeführt und die gasförmigen Bestandteile nach Zerkleinerung der Behälter über eine nicht dargestellte Evakuierungspumpe abgezogen werden können.

Die Anlage wird folgendermaßen betrieben:
Zunächst werden bei geöffneter Klappe 8 die zu entsorgenden Spraydosen oder ähnliches in den Druckbehälter 1 eingegeben. Anschließend wird dem Druckbehälter ein Inertgas zugeführt und ein Druck eingestellt, der über dem Innendruck der Spraydosen liegt. Das Inertgas und die Druckverhältnisse sollen in erster Linie explosive Reaktionen verhindern. Durch die Zerkleinerungseinrichtung werden die Spraydosen aufgebrochen und deren Inhaltstoffe freigesetzt. Durch die im Druckbehälter bestehenden Druckverhältnisse (der Druck ist mindestens so hoch wie der Innendruck der Spraydosen) von vorzugsweise einer unteren Druckgrenze von 3, 4 oder 5 bar bis hin zu einer Obergrenze zwischen 10 bis 15 bar. Wird gewährleistet, daß die Inhaltstoffe der unter Druck stehenden Behälter flüssig bleiben, also nach unten abfließen und dort abgezogen werden können. Bis auf ein vernachlässigbaren Restdampfdruck bleibt demnach auch die Inertgasatmosphäre im Druckkessel erhalten. Die Zerkleinerungsvorrichtung wird mit einer Geschwindigkeit betrieben, bei der keine merkliche Temperaturerhöhung durch das Zerschneiden bzw. Aufschneiden der Dosen auftritt. Die ggf. über die Sprühdüsen 6 eingegebenen chemischen Substanzen sollen beispielsweise das Aufschäumen von Doseninhalten beim Zerstören verhindern, das z.B. bei der Entsorgung von in Spraydosen abgefüllten Teppichschäumen auftritt.

Ist eine Charge bearbeitet, wird das Inertgas in den Pufferbehälter abgepumpt, eine neue Charge eingefüllt und das Inertgas wieder über ein Kompressorsystem in den Druckbehälter eingelassen, bevor die unter Druck stehenden Behälter aufgeschnitten werden.

Alternativ hierzu ist es möglich, statt des Pufferspeichers eine Abgasreinigungsanlage vorzusehen, die beispielsweise aus einem Aktivkohlefilter und nachgeschalteten Molekularsieben besteht. Eine weitere Möglichkeit wäre die Nachschaltung einer Kühlfalle.

**Patentansprüche**

1. Verfahren zum Zerkleinern von unter Druck stehenden Behältern, wie z.B. Spraydosen, in einer Inertgasatmosphäre, in der die Behälter zerkleinert und die zerkleinerten Behälterteile von den Inhaltsstoffen getrennt werden, wobei die Zerkleinerung und das Auffangen der Inhaltsstoffe unter einem Inertgas-Überdruck erfolgt,
   **dadurch gekennzeichnet,**
   daß der Inertgas-Überdruck mindestens so hoch wie der Innendruck der Behälter eingestellt wird.

2. Verfahren nach Anspruch 1, dadurch gekennzeichnet, daß als Inertgas Stickstoff, Kohlensäure oder Helium verwendet wird.

3. Verfahren nach Anspruch 1 oder 2, dadurch gekennzeichnet, daß der Überdruck mindestens auf den Verflüssigungsdruck von gasförmigen Inhaltsstoffen, z.B. den Treibgasen, einstellbar ist.

4. Verfahren nach einem der Ansprüche 1 bis 3, dadurch gekennzeichnet, daß die Inhaltsstoffe durch Eindüsen in einen Verbrennungsofen beseitigt werden.

5. Verfahren nach einem der Ansprüche 1 bis 3, dadurch gekennzeichnet, daß die Treibgase von den übrigen Inhaltsstoffen abgetrennt und zur Wiederverwertung gesammelt werden.

6. Verfahren nach Anspruch 5, dadurch gekennzeichnet, daß die Inhaltsstoffe als recyclebares Produkt einer Charge in den jeweiligen Prozeß zurückgeführt wird.

7. Vorrichtung zur Durchführung des Verfahrens nach einem der Ansprüche 1 bis 6, bestehend aus einem inertisierbaren Druckbehälter (1), in dem eine Zerkleinerungsvorrichtung (2) und eine Trennvorrichtung (3) angeordnet sind, und einem an dem Druckbehälter (1) angesetzten druckbeaufschlagbaren Auffangbehälter (4), dadurch gekennzeichnet, daß der Druckbehälter (1) und der Auffangbehälter (4) für einen Druck von 3 bar bis 15 bar, vorzugsweise 10 bis 15 bar, ausgelegt sind.

8. Vorrichtung nach Anspruch 7, dadurch gekennzeichnet, daß als Zerkleinerungsvorrichtung (2) ein langsamlaufendes Schneidwerk angeordnet ist.

9. Vorrichtung nach einem der Ansprüche 7 oder 8, dadurch gekennzeichnet, daß als Trennvorrichtung (3) im Druckbehälter (1) ein pneumatisch oder elektrisch angetriebenes Schwingsieb aufgehängt ist.

10. Vorrichtung nach Anspruch 9, dadurch gekennzeichnet, daß der Antrieb (5) des Schwingsiebes pneumatisch mit Inertgas antreibbar ist.

11. Vorrichtung nach einem der Ansprüche 7 bis 10, dadurch gekennzeichnet, daß oberhalb des Schneidwerkes Sprühdüsen (6) für ein chemisches Mittel zum Beeinflussen der Behälterinhaltsstoffe angeordnet sind.

12. Vorrichtung nach einem der Ansprüche 7 bis 11, dadurch gekennzeichnet, daß der Auffangbehälter (4) über einen Hubtisch durch eine automatische Kupplung (7) an den Druckbehälter (1) anschließbar ist.

13. Vorrichtung nach einem der Ansprüche 7 bis 12, dadurch gekennzeichnet, daß die Zufuhr der zu zerkleinernden Behälter über einen druckdichten Behälterverschluß (8) erfolgt.

14. Vorrichtung nach einem der Ansprüche 7 bis 13, dadurch gekennzeichnet, daß für das Inertgas und gasförmige Bestandteile des Doseninhalts ein Pufferbehälter (99 über eine Evakuierungspumpe an dem Druckbehälter (1) angeschlossen ist

**Claims**

1. A process for the comminution of pressurized containers such as, for example, spray cans, in an inert gas atmosphere in which the containers are comminuted and the comminuted parts of the containers are separated from the substances they contain, the substances contained being comminuted and intercepted under an inert gas excess pressure, characterized in that the inert gas excess pressure is adjusted at least as high as the internal pressure of the containers.

2. A process according to claim 1, characterized in that the inert gas used is nitrogen, carbon dioxide or helium.

3. A process according to claims 1 or 2, characterized in that the excess pressure is adjustable at least to the liquefaction pressure of gaseous contained substances, for example, the propellent gases.

4. A process according to one of claims 1 to 3, characterized in that the contained substances are eliminated by injection into a combustion furnace.

5. A process according to one of claims 1 to 3, characterized in that the propellent gases are separated from the other contained substances and collected for re-utilization.

6. A process according to claim 5, characterized in that the contained substances are returned as a recyclable product of a charge to the particular process.

7. An apparatus for the performance of the process according to one of claims 1 to 6, comprising a pressurized container (1) which can be rendered inert and in which a comminuting device (2) and a separating device (3) are disposed, and an intercepting container (4) which can be acted upon by pressure and is attached to the pressurized container (1), characterized in that the pressurized container (1) and the intercepting container (4) are designed for a pressure of 3 bar to 15 bar, preferably 10 to 15 bar.

8. An apparatus according to claim 7, characterized in that a low-speed cutting mechanism is provided as the comminuting device (2).

9. An apparatus according to one of claims 7 or 8, characterized in that a pneumatically or electrically driven swing sieve is suspended as the separating device (3) in the pressurized container (1).

10. An apparatus according to claim 9, characterized in that the drive (5) of the swing sieve can be driven pneumatically with inert gas.

**11.** An apparatus according to one of claims 7 to 10, characterized in that spraying nozzles (6) for a chemical agent to influence the substances contained in the containers are disposed above the cutting mechanism.

**12.** An apparatus according to one of claims 7 to 11, characterized in that the intercepting container (4) can be connected via a lifting table by an automatic coupling (7) to the pressurized container (1).

**13.** An apparatus according to one of claims 7 to 12, characterized in that the containers to be comminuted are supplied via a pressure-tight container closure (8).

**14.** An apparatus according to one of claims 7 to 13, characterized in that a buffer container (99) is connected via an evacuation pump to the pressurized container (1) for the inert gas and the gaseous components of the contents of the container.

**Revendications**

**1.** Procédé de broyage de récipients mis sous pression, comme, par exemple, des doses injectables, dans une atmosphère de gaz inerte, dans laquelle les récipients sont broyés et dans laquelle les parties broyées des récipients sont séparées des produits contenus, le broyage et la reprise du produit contenu se faisant sous une surpression de gaz inerte, caractérisé en ce que la surpression du gaz inerte est au moins aussi élevée que la pression interne des récipients.

**2.** Procédé suivant la revendication 1, caractérisé en ce que, comme gaz inerte, on utilise de l'azote, du gaz carbonique, ou de l'hélium.

**3.** Procédé suivant la revendication 1 ou la revendication 2, caractérisé en ce que la surpression peut être réglée au moins sur la pression de liquéfaction des produits gazeux contenus, par exemple les gaz d'entraînement.

**4.** Procédé suivant l'une quelconque des revendications 1 à 3, caractérisé en ce que les produits contenus sont éliminés par injection dans un four d'incinération.

**5.** Procédé suivant l'une quelconque des revendications 1 à 3, caractérisé en ce que les gaz d'entraînement sont séparés des autres produits contenus et sont récupérés pour réutilisation.

**6.** Procédé suivant la revendication 5, caractérisé en ce que les produits contenus sont renvoyés, comme produits recyclables d'une charge, dans les différents process concernés.

**7.** Dispositif pour l'exécution du procédé suivant l'une quelconque des revendications 1 à 6, constitué, d'une part, d'un récipient en pression (1) pouvant être rendu inerte, dans laquel un dispositif de broyage (2) et un dispositif de séparation (3) sont installés, et constitué, d'autre part, d'un récipient de réception (4), associé au récipient en pression (1) et que l'on peut mettre en pression, caractérisé en ce que le récipient en pression (1) et le récipient de réception (4) sont dimensionnés pour une pression de 3 à 5 bar, de préférence 10 à 15 bar.

**8.** Dispositif suivant la revendication 7, caractérisé en ce que, comme dispositif de broyage (2), on dispose d'une cisaille lente.

**9.** Dispositif suivant l'une quelconque des revendications 7 ou 8, caractérisé en ce que, comme dispositif de séparation (3), dans le récipient en pression (1), est suspendu un crible vibrant entraîné pneumatiquement ou électriquement.

**10.** Dispositif suivant la revendication 9, caractérisé en ce que le moteur (5) du crible vibrant peut être entraîné pneumatiquement avec un gaz inerte.

**11.** Dispositif suivant l'une quelconque des revendications 7 à 10, caractérisé en ce qu'audessus de la cisaille, sont disposées des buses d'arrosage pour un produit chimique destiné à agir sur les produits contenus dans le récipient.

**12.** Dispositif suivant l'une quelconque des revendications 7 à 11, caractérisé en ce que le récipient de réception (4) peut être raccordé par une table élévatrice au récipient en pression (1) au moyen d'un accouplement (7) automatique.

**13.** Dispositif suivant l'une quelconque des revendications 7 à 12, caractérisé en ce que l'alimentation en récipients à broyer se fait par une fermeture (8) du récipient, étanche en pression.

**14.** Dispositif suivant l'une quelconque des revendications 7 à 13, caractérisé en ce que, pour le gaz inerte et les constituants gazeux du contenu des doses, un récipient tampon (99) est raccordé au récipient en pression (1), par l'intermédiaire d'une pompe d'évacuation.

FIG. 1

FIG. 2